# EUROPÄISCHE PATENTSCHRIFT

(11) **EP 1 918 157 B1**
(45) Veröffentlichungstag und Bekanntmachung des Hinweises auf die Patenterteilung: **11.04.2012**
(21) Anmeldenummer: 07118056.6
(22) Anmeldetag: 08.10.2007
(51) Int. Cl.: B60P 1/48

(54) **Vorrichtung zum Heben und Transferieren von Gütern sowie Handhubwagen**
Device for lifting and transferring goods and hand stacker
Dispositif destiné à lever et transférer des produits ainsi que wagon de levage manuel

(30) Priorität: 30.10.2006 CH 17302006
(43) Veröffentlichungstag der Anmeldung: 07.05.2008
(73) Patentinhaber: Stauffer, Jörg, 6403 Küssnacht am Rigi (CH); Stauffer, Dominik, 6403 Küssnacht am Rigi (CH); Stauffer, Roger, 7153 Falera (CH)
(72) Erfinder: Stauffer, Jörg, 6403 Küssnacht am Rigi (CH); Stauffer, Dominik, 6403 Küssnacht am Rigi (CH); Stauffer, Roger, 7153 Falera (CH)
(74) Vertreter: Rutz & Partner

(56) Entgegenhaltungen:
- DE-U1- 20 007 538
- GB-A- 1 383 596
- GB-A- 2 201 937
- GB-A- 2 334 710
- SE-B- 459 487
- US-A- 3 474 923

## Beschreibung

Die Erfindung betrifft eine Vorrichtung zum Heben und Transferieren von Gütern sowie einen Handhubwagen.

Die Erfindung betrifft insbesondere eine Hubvorrichtung sowie eine Basisvorrichtung für das Laden und Entladen von Paletten in ein bzw. aus einem Transportfahrzeug, dessen Laderaum zur Aufnahme mehrerer Paletten geeignet ist.

Eine gattungsgemässe Hubvorrichtung, die dem Beladen und En Laden von Kleintransportern dient ist aus [1], EP 0 849 115 A1 bekannt.

Mit Kleintransportfahrzeugen können in Kisten verpackte oder auf Paletten aufgestapelte Güter transportiert werden. Zu den Kleintransportfahrzeugen gehören für den Stadt- und Nahverkehr bestimmte Kleinlieferwagen, Kurierfahrzeuge und Servicewagen. Sie alle besitzen Hecktüren, welche an sich ein einfaches Be- und Entladen der Ladebrücke mit Kisten und Paletten ermöglichen. Zum Be- und Entladen von diesen Fahrzeugen kommen vorzugsweise Gabelstapler in Frage. Für Fälle in denen kein Gabelstapler zur Verfügung steht, kann die in [1] offenbarte Vorrichtung vorteilhaft eingesetzt werden.

Die in [1] vorgestellte Be- und Entladevorrichtung besitzt als wesentliches Element zwei einander gegenüberliegende und zum Tragen einer Palette dienende Schwenkarme. Diese sind an einem Gestell befestigt und, angetrieben von je einem Hydraulikzylinder synchron um eine gemeinsame Achse drehbar.

Das Gestell ist in einem Laderaum eines Kleintransporters montiert und weist zwei zueinander parallel angeordnete Schienen auf, welche zum Tragen je eines Schwenkarmes, sowie eines Hydraulikzylinders bestimmt sind. Schwenkarm und Hydraulikzylinder sind an den beiden Schienen angelenkt. Insbesondere ist der Schwenkarm am einen Ende, nämlich an dem der nicht gezeichneten Hecktüre des Transporters zugewandten Schienenende, und der Hydraulikzylinder am anderen Schienenende drehbar angeordnet.

Jeder Schwenkarm ist im Gestell ortsfest gelagert und am freien Ende der zum Hydraulikzylinder gehörenden Schubstange angelenkt. Darüber hinaus besitzen die plattenartigen Schwenkarme an ihren einander zugewandten Seiten noch je eine, in einer Schiene oder anderen Führungsmitteln gehaltene und entlang der Längskante verschiebbare Tragstange, die an ihrem entlang der Seitenwände verschiebbaren Ende je ein Laufrad aufweist, mit welchem sie beim Betrieb der Be- und Entladevorrichtung auf einer Rollbahn fährt und so das Ein-und Ausschwenken der Palette in bzw. aus dem gedeckten Laderaum entlang einer Kurve ermöglicht, welche im Bereich der Eintrittszone horizontal verläuft und den geringsten Abstand zur Schwenkachse aufweist. An ihren freien Enden sind die beiden Tragstangen durch eine horizontale Stange miteinander verbunden, welche mit einer Trageinrichtung zum Tragen der Palette versehen ist. Die Be- und Entladevorrichtung weist ferner Antriebsmittel auf, wie einen Antriebsmotor und mindestens ein Steuerelement, um die Hydraulikzylinder synchron anzutreiben.

Mit der aus [1] bekannten Vorrichtung kann daher der Laderaum eines Kleintransporters elegant mit einer einzelnen Palette beladen werden.

Zum Beladen eines grösseren bzw. mittelgrossen Transportfahrzeugs, beispielsweise eines Mercedes-Sprinter, dessen Laderaum mehrere Paletten aufnehmen kann, ist die aus [1] bekannte Vorrichtung hingegen weniger geeignet.

Wie in [2], Mercedes-Benz, "Beladen mit vielen Vorteilen", After Sales Service- und Zubehörangebot Herbst/Winter 2006, Titelseite und [3], Mercedes-Benz, "Der neue Sprinter", Katalog vom 15.10.2005, Seiten 15 und 16 gezeigt und beschrieben ist, kann der Mercedes-Sprinter mit mehreren Europaletten (Abmessungen 1,2 m Breite x 0,8 m Länge) beladen werden. In den genannten Dokumenten ist gezeigt, dass drei Paletten mittels motorisierter Gabelstapler durch eine hintere und zwei seitliche Laderaumöffnungen quer in den Laderaumraum des Fahrzeugs eingeführt werden können. Für das Beladen des Fahrzeugs mit weiteren Paletten ist es erforderlich, dass beispielsweise die bereits durch die hintere Laderaumöffnung eingeführte Palette manuell verschoben wird. Trotz der Verwendung eines motorisierten Gabelstaplers lässt sich das Fahrzeug daher nicht optimal beladen.

Aus GB-A-2 201937 und US-A-3 474 923 und US2792141 sind ferner Hubvorrichtungen bekannt, mittels derer Güter erfasst und in einen auf einem Fahrzeug vorgesehenen Behälter oder auf eine Ladebrücke verschiebbar sind. Diese Vorrichtungen sind jedoch nicht dazu vorgesehen, Güter in ein Transportfahrzeug zu laden und aus diesem wieder zu entladen. Das Entladen erfolgt beispielsweise durch Kippen der Ladebrücke.

Der vorliegenden Erfindung liegt daher die Aufgabe zugrunde, eine verbesserte Vorrichtung zum Heben und Transferieren von Gütern zu schaffen.

Insbesondere ist eine Hubvorrichtung zu schaffen, welche für ein der Aufnahme von mehreren Paletten dienendes Transportfahrzeug oder für einen Güterumschlagplatz geeignet ist, um Güter, insbesondere Paletten, zu laden, zu entladen oder gegebenenfalls zwischen zwei Ebenen unterschiedlicher Höhe zu verschieben.

Ferner ist eine Hubvorrichtung zu schaffen, mittels der der Laderaum eines mittelgrossen Transportfahrzeugs mit geringem Aufwand, insbesondere mit geringem Kraftaufwand und Zeitaufwand, derart beladen werden kann, dass der zur Verfügung stehende Raum optimal genutzt ist.

Mittels der Hubvorrichtung soll das Transportfahrzeug ferner beladen und entladen werden können, ohne dass ein Gabelstapler, insbesondere ein motorisierter Gabelstapler erforderlich ist, mittels dessen die Lasten, wie in [2] und [3] gezeigt, auf die Höhe des Laderaums angehoben und in diesen eingeführt werden.

Ferner sind Vorrichtungen anzugeben, die vorteilhaft mit der Hubvorrichtung zusammenwirken können, um einen vorteilhaften Fluss der Güter zu gewährleisten.

Die Lösung dieser Aufgabe gelingt mit einer Hubvorrichtung gemäss Patentanspruch 1, einer Basisvorrichtung gemäss Anspruch 12 und einem Handhubwagen gemäss Anspruch 13.

Die Hubvorrichtung, welche insbesondere für ein der Aufnahme von mehreren Paletten geeignetes Transportfahrzeug oder für einen Güterumschlagplatz vorgesehen ist, dient dem Laden, Entladen oder Verschieben von Gütern gegebenenfalls zwischen zwei Ebenen unterschiedlicher Höhe.

Die Hubvorrichtung weist ein Hebelwerk auf mit zwei dem Anheben und Absenken einer Last dienenden Schwenkarmen, die um eine gemeinsame Achse drehbar gelagert und je mittels eines ersten Gelenks drehbar mit Schubstangen verbunden sind, die je mittels einer ersten bzw. zweiten Antriebseinheit antreibbar sind.

Erfindungsgemäss weist die Hubvorrichtung eine stabile, mittels Montagemitteln im Fahrzeugladeraum oder auf dem Güterumschlagplatz positionierbare Basisvorrichtung auf, die mit zwei zueinander parallelen und mittels wenigstens einer Querstrebe miteinander verbundenen Basisprofilen versehen ist, an denen je ein mit dem zugehörigen Schwenkarm verbundenes zweites Gelenk und je ein mit der zugehörigen Antriebseinheit verbundenes drittes Gelenk vorgesehen ist.

Die erfindungsgemässe Hubvorrichtung kann daher in einem Transportfahrzeug oder auf einem Güterumschlagplatz, beispielsweise auf einer Laderampe montiert werden, um Güter, insbesondere Paletten in das Fahrzeug einzuladen bzw. aus dem Fahrzeug auszuladen oder auf die Laderampe anzuheben bzw. von der Laderampe abzusenken.

Die Hubvorrichtung kann daher flexibel eingesetzt, wahlweise in einem Fahrzeug installiert und deinstalliert werden. werden. Ein Transportfahrzeug, wie es in [3] gezeigt und beschrieben ist, kann innerhalb weniger Minuten umgerüstet, bzw. mit der erfindungsgemässen Hubvorrichtung versehen werden. Dazu wird die Hubvorrichtung in den Laderaum des Transportfahrzeugs eingeschoben. Anschliessend werden die Montagemittel der Basisvorrichtung, beispielsweise Flanschen oder Ösen, mit den im Laderaum vorgesehenen Montagemitteln verbunden, gegebenenfalls verschraubt oder mittels Seilen angebunden. Nach der Installation der Vorrichtung können Güter geladen oder entladen werden, ohne dass ein Gabelstapler erforderlich ist.

Besonders einfach gelingt dies mit einem erfindungsgemässen Handhubwagen, der anhand der erfindungsgemässen Hubvorrichtung mitsamt einer Palette in den Laderaum des Fahrzeugs angehoben werden kann. Dazu sind die Lastarme des Handhubwagens mittels einer Kopplungsvorrichtung mit dessen Liftvorrichtung oder der Deichsel lösbar verbindbar und mit einer Tragstruktur fest verbunden, die vorzugsweise mit zwei Halteelementen versehen ist, die von der erfindungsgemässen Hubvorrichtung erfasst und mitsamt dem beladenen Handhubwagen angehoben und in das Fahrzeug transferiert werden können. Im Laderaum kann die Palette mittels des Handhubwagens passend positioniert werden, so dass der im Laderaum zur Verfügung stehende Platz mit weiteren Paletten gefüllt werden kann. Dazu wird der Handhubwagen mit der Hubvorrichtung wieder gekoppelt und abgesenkt, um die nächste Palette zu laden. Der erfindungsgemässe Handhubwagen kann ferner mit weiteren Hubvorrichtungen, beispielsweise einem Kran, verwendet werden.

Erfindungsgemässe Handhubwagen können dabei basierend auf der in [4], CH 374 589 offenbarten Lösung oder basierend auf weiteren bekannten motorisierten oder nicht motorisierten Vorrichtungen aufgebaut sein, die dem Transport von einzelnen Paletten dienen.

Sofern kein erfindungsgemässer Handhubwagen zur Verfügung steht, wird vorzugsweise eine erfindungsgemässe Basisvorrichtung verwendet, die vorzugsweise parallel zu den Basisprofilen verlaufend, ein, zwei oder mehrere Schienenpaare aufweist, mittels denen je ein Transportelement, beispielsweise eine Transportplatte geführt ist, wobei die Transportelemente übereinander verschiebbar sind und dazu gegebenenfalls ineinander verschiebbare U-Profile aufweisen oder auf unterschiedlichen Höhen geführt sind. Die Paletten können mittels der erfindungsgemässen Hubvorrichtung daher sequentiell auf die Basisvorrichtung angehoben und je mittels eines Transportelements entlang dem zugehörigen Schienenpaar in den Laderaum verschoben werden. Die Länge der Schienenpaare bzw. der Basisvorrichtung ist dabei entsprechend den Dimensionen des Laderaums des Transportfahrzeugs oder, sofern die Hubvorrichtung auf einer Laderampe montiert ist, entsprechend der Länge des dortigen Transportwegs gewählt.

Die erfindungsgemässe Basisvorrichtung kann ferner auch mit anderen Hubvorrichtungen beliefert werden. Beispielsweise kann die erfindungsgemässe Basisvorrichtung, ohne Hubvorrichtungsteile, im Laderaum des in [3] gezeigte Transportfahrzeugs installiert und anschliessend beispielsweise mittels eines Gabelstaplers sequentiell mit Paletten beschickt werden. Vorzugsweise sind die Transportplatten dabei entlang dem Schienenweg an verschiedenen Positionen fixierbar.

Die Schwenkarme sind vorzugsweise mittels eines der Aufnahme der Last dienenden Tragelements miteinander verbunden, welches gegebenenfalls zwei Halteelemente oder Haltebügel aufweist. Die Verwendung von zwei Halteelementen erlaubt, die aufgenommene Last zu stabilisieren bzw. ein seitliches Schaukeln der Last zu vermeiden.

Die Schwenkarme sind dabei vorzugsweise mit Distanzelementen versehen, die mit den Schubstangen der Antriebseinheiten verbunden und derart abgewinkelt sind, dass das Tragelement unter das Niveau der Basisvorrichtung abgesenkt werden kann, um eine tiefer liegende Last aufzunehmen.

In einer weiteren vorzugsweisen Ausgestaltung ist jeder der beiden Schwenkarme mit dritten und vierten Antriebseinheiten ausgerüstet, welche Schubstangen antreiben, an denen das der Aufnahme der Last dienende Tragelement vorgesehen ist.

Die dritten und vierten Antriebseinheiten sind dabei manuell oder mittels eines Steuerprogramms und einer Steuerelektronik vorzugsweise in Abhängigkeit des Drehwinkels der Schwenkarme steuerbar, so dass das der Aufnahme der Last dienende Tragelement entlang einer vorzugsweise programmierbaren Kurve geführt wird. Beispielsweise ist die Auslenkung der Schubstangen der dritten und vierten Antriebseinheit in Abhängigkeit des Drehwinkels der Schwenkarme steuerbar, der gegebenenfalls mittels eines Messumformers erfasst oder anhand der Auslenkung der Schubstangen der ersten beiden Antriebseinheiten berechnet wird. In dieser Ausgestaltung ist die Hubvorrichtung daher derart steuerbar, dass das Tragelement einer oder einer von mehreren Kurven folgt, die für den Laderaum oder für den Güterumschlagplatz individuell festgelegt wurden. Für jede Parkposition einer Palette kann dabei eine Kurve vorgesehen sein, so dass beim vollständigen Beladen eines Fahrzeugs alle Kurven, die vorzugsweise in der Steuereinheit gespeichert sind, sequentiell abgefahren werden.

Die mittels einer Steuereinheit steuerbaren Antriebseinheiten sind dabei vorzugsweise pneumatische, hydraulische oder elektrische Antriebseinheiten, wie Hydraulikzylinder, welche die zugehörigen Schubstangen antreiben.

In Abhängigkeit der vorliegenden Ausgestaltung der Erfindung können die zu transportierenden Paletten daher
a) mittels des zusammen mit einer Palette in den Laderaum transferierten Handhubwagens oder
b) direkt mittels der mit ausfahrbaren Schwenkarmen versehenen Hubvorrichtung oder
c) nach dem Einführen in den Ladenraum mittels der auf Schienen geführten Transportelemente
an passender Stelle im Laderaum parkiert werden.

Die Erfindung wird nachstehend anhand von Zeichnungen näher erläutert. Dabei zeigt:
- Fig. 1: eine erfindungsgemässe Hubvorrichtung 1 mit einer Basisvorrichtung 10, welche ein Hebelwerk mit zwei Schwenkarmen 31 trägt, die um eine gemeinsame Achse drehbar gelagert und je mittels einer Schubstange 22 einer ersten bzw. zweiten Antriebseinheit 2A bzw. 2B antreibbar sind, um eine Last, beispielsweise eine Palette, auf die Basisvorrichtung 10 anzuheben;
- Fig. 2: eine erfindungsgemässe Hubvorrichtung 1 mit einer vorzugsweise ausgestalteten Basisvorrichtung 10, die auf Schienenpaaren 151A, 151B; 152A, 152B geführte Transportelemente 161, 162 aufweist, mittels denen geladene Paletten 8 im Laderaum verschiebbar und an passender Stelle positionierbar und gegebenenfalls arretierbar sind;
- Fig. 3: die Basisvorrichtung 10 von Figur 2 ohne das Hebelwerk der Hubvorrichtung 1;
- Fig. 4: Betriebsmöglichkeiten einer in einem Fahrzeug installierten, vorzugsweise ausgestalteten Hubvorrichtung 1;
- Fig. 5: die im Laderaum eines Transportfahrzeugs installierte Hubvorrichtung 1 gemäss Figur 1 während des Anhebens eines erfindungsgemässen Handhubwagens 5 gemäss Figur 6;
- Fig. 6: den Handhubwagen 5 gemäss Figur 5, der Lastarme 51 aufweist, die mittels einer Kopplungsvorrichtung 55 mit einer Liftvorrichtung 52 oder der Deichsel 54 lösbar verbindbar und mit einer Tragstruktur 56 verbunden sind, die mit zwei Halteelementen 564 versehen ist, das der Kopplung insbesondere mit der Hubvorrichtung 1 dient; und
- Fig. 7: der Handhubwagen 5 von Figur 6 mit einer Detailansicht, in der die Kopplungsvorrichtung 55 vergrössert dargestellt ist.

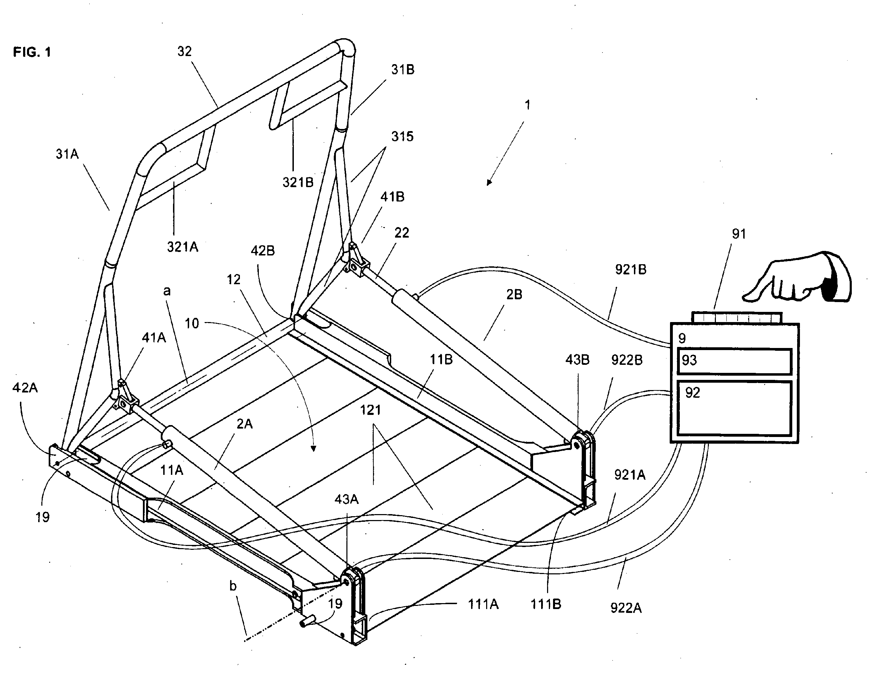

Figur 1 zeigt eine erfindungsgemässe Hubvorrichtung 1 mit einer Basisvorrichtung 10, welche ein Hebelwerk mit zwei Schwenkarmen 31A, 31B trägt, die um eine gemeinsame erste Achse a drehbar gelagert und mittels ersten Gelenken 41A, 41B mit Schubstangen 22 einer ersten und einer zweiten Antriebseinheit 2A bzw. 2B verbunden sind, welche um eine gemeinsame zweite Achse b drehbar sind.

Die Basisvorrichtung 10, welche die Plattform oder Operationsbasis der Hubvorrichtung 1 bildet, weist zwei mittels wenigstens einer Querstrebe 12 parallele zueinander gehaltene Basisprofile 11A, 11B auf. Die Basisprofile 11A, 11B weisen einander zugewandte Aufnahmenuten 111A, 111B auf, in denen sechs Bodenelemente 121, vorzugsweise Leichtmetallplatten gehalten sind. Die Basisprofile 11A, 11B weisen ferner schematisch gezeigte Montageelemente 19, gegebenenfalls Flanschen oder Ösen auf, mittels derer die Basisvorrichtung 10 beispielsweise im Laderaum eines Fahrzeugs fest montierbar ist.

Die Basisprofile 11A, 11B weisen an deren Enden zueinander korrespondierende zweite und dritte Gelenke 42A, 42B; 43A, 43B auf, welche paarweise die erste und zweite Achse a bzw. b definieren. Dabei ist die Basisvorrichtung 10 mittels der zweiten Gelenke 42A, 42B mit den Schwenkarmen 31A, 31B und mittels der dritten Gelenke 43A, 43B mit den ersten und zweiten Antriebseinheit 2A bzw. 2B verbunden, die vorliegend als Hydraulikzylinder ausgestaltet sind. Die Hydraulikzylinder sind über Druckleitungspaare 921A, 921B bzw. 922A, 922B mit einer Steuereinheit 9 verbunden, welche eine Bedienungseinheit 91, eine Hydraulikpumpe 92 und eine gegebenenfalls programmierbare Steuerelektronik 93 aufweist.

Anstelle von hydraulischen Antriebsmitteln können die Antriebseinheiten 2A, 2B jedoch auch andere, wie pneumatische, mechanische oder elektrische Antriebsmittel aufweisen.

Die Schwenkarme 31A, 31B, die endseitig durch ein mit zwei Tragbügeln 321A, 321B versehenes Tragelement 32 miteinander verbunden sind, weisen Distanzelemente 315 auf, an denen die ersten Gelenke 41A, 41B befestigt sind. Dadurch gelingt es, das Tragelement 32 beim vollständigen Ausfahren der Schubstangen 22 unter das Niveau der Basisvorrichtung 10 zu senken und eine tiefer liegende Last aufzunehmen.

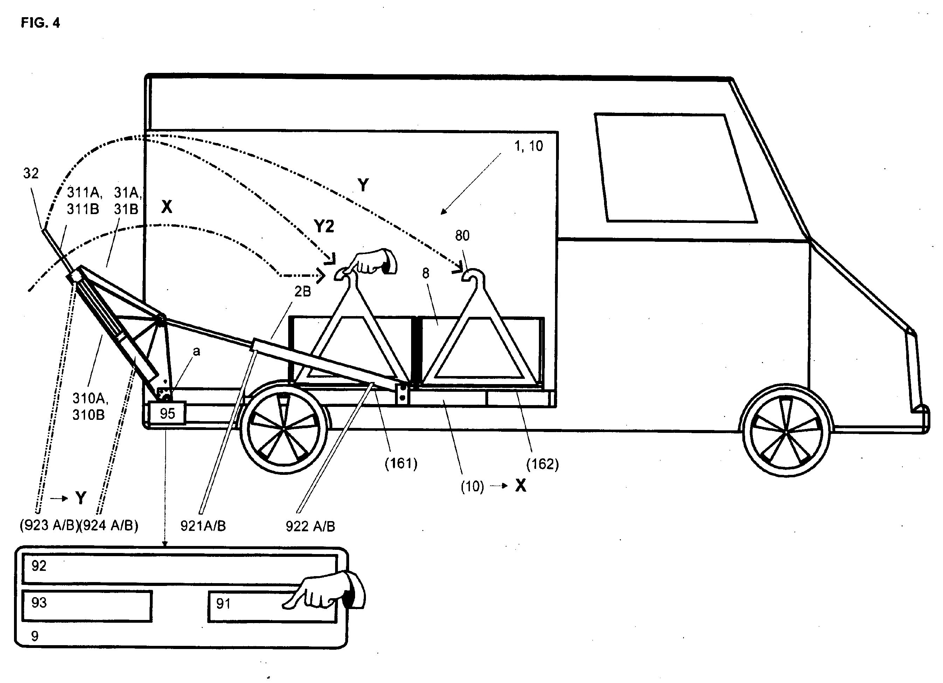

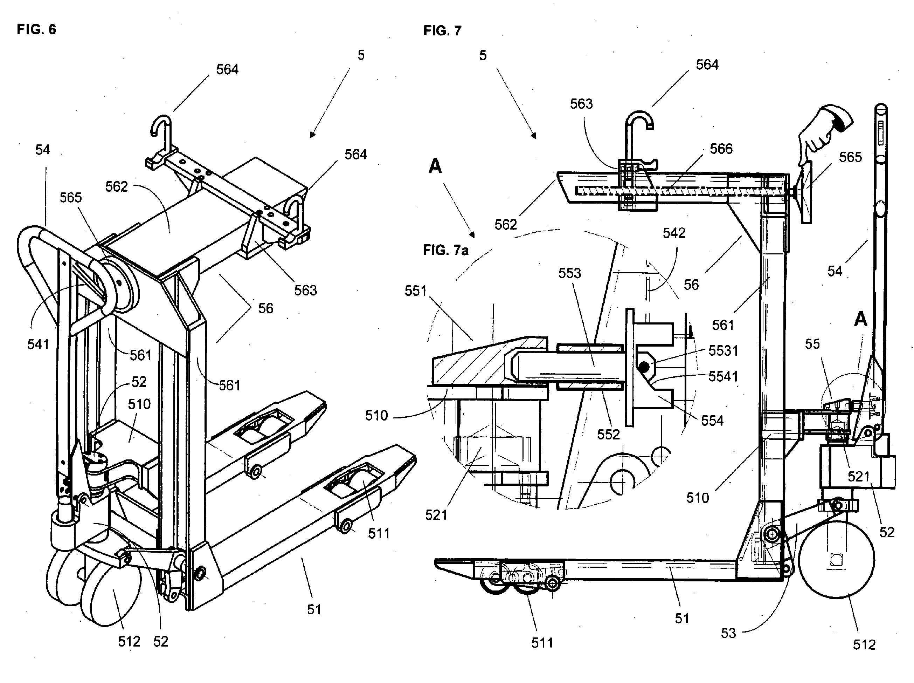

Wie in den Figuren 4 und 7 gezeigt, kann die Hubvorrichtung 1 von Figur 1 im Laderaum eines Transportfahrzeugs (siehe [3]) oder auf einer Laderampe montiert werden.

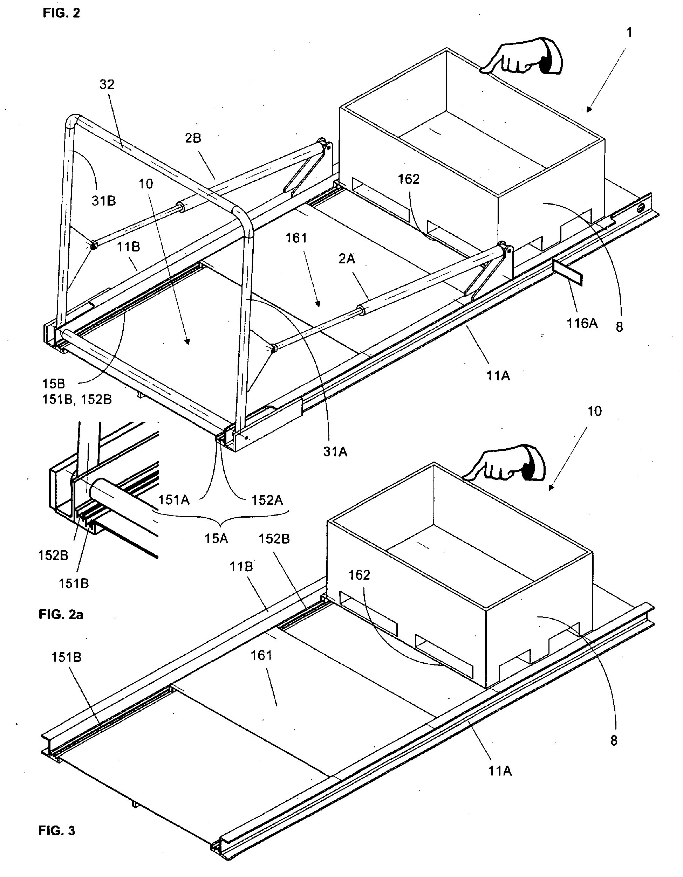

Figur 2 zeigt eine erfindungsgemässe Hubvorrichtung 1 mit einer vorzugsweise ausgestalteten Basisvorrichtung 10, die parallel zu den Basisprofilen 11A, 11B mit zwei Schienenpaaren 151A, 151B; 152A, 152B versehen ist (siehe auch Figur 2a). Durch jedes der Schienenpaare 151A, 151B und 152A, 152B ist ein plattenförmiges Transportelement 161, 162 geführt, mittels dessen geladene Paletten 8 im Laderaum des Transportfahrzeugs verschiebbar und an passender Stelle positionierbar und gegebenenfalls arretierbar ist (siehe den symbolische gezeigten Schieber 116A). Die Transportelemente 161, 162 sind vor dem Beladen des Laderaumes vorzugsweise übereinander am vorderen oder hinteren Ende der Basisvorrichtung 10 gestapelt.

Die Transportelemente 161 und 162, deren Anzahl vorzugsweise entsprechend der Kapazität des Laderaums gewählt ist, sind brückenförmig ausgestaltet und unterschiedlich dimensioniert bzw. weisen ineinander passende U-Profile auf, so dass das zweite Transportelement 162 über das erste Transportelement 161 hinweg geschoben werden kann. Die Güter bzw. Paletten 8 können daher sequentiell auf die Basisvorrichtung 10 angehoben und vereinzelt auf einem Transportelement 161; 162 entlang den Schienenpaaren 151A, 151B und 152A, 152B in den Laderaum verschoben werden. Damit schwerere Lasten verschoben werden können, sind die Transportelemente 161, 162 vorzugsweise mittels Rollen oder Gleitelementen auf die Schienen 151A, 151B bzw. 152A, 152B gelagert.

Figur 3 zeigt die Basisvorrichtung 10 von Figur 2 ohne das Hebelwerk der Hubvorrichtung 1. In dieser Ausgestaltung kann die Basisvorrichtung 10 vorteilhaft in einem Transportfahrzeug installiert werden, wie es beispielsweise in [3] gezeigt ist. Anschliessend können die Transportelemente 161, 162, ... beispielsweise mittels Gabelstaplern oder weiteren Hubvorrichtungen sequentiell mit Paletten beschickt und in den Laderaum verschoben werden.

Figur 4 zeigt Betriebsmöglichkeiten einer in einem Fahrzeug installierten, vorzugsweise ausgestalteten Hubvorrichtung 1. Ohne die vorzugsweise Ausgestaltung der Schwenkarme 31A, 31B entspricht die Vorrichtung derjenigen von Figur 2. Mittels der Schwenkarme 31A, 31B und dem Tragelement 32 können Transportcontainer 80 mit je einer darin gehaltenen Palette 8 entlang der Kurve X auf die Transportelemente 161, 162, ... angehoben und mit geringem Kraftaufwand manuell in den Laderaum verschoben werden.

In der in Figur 4 gezeigten vorzugsweisen Ausgestaltung weisen die Schwenkarme 31A, 31B zudem ausfahrbare Schubstangen 311A, 311B auf, die mittels einer dritten und einer vierten Antriebseinheit 310A bzw. 310B derart antreibbar sind, dass das an den Schwenkarmen 31 vorgesehene Tragelement 32 und somit die gehaltene Palette 8 einer Kurve Y folgt. Der Container 80 mit der Palette 8 kann daher direkt zu einer passenden Stelle im Laderaum transferiert werden. Der nächste Container 80 kann entlang einer weiteren Kurve Y2 in den Laderaum transferiert werden. Sofern identische Container 80 verwendet werden, kann das sequentielle Beladen und Entladen des Fahrzeugs programmgesteuert erfolgen. Durch den Anwender sind dabei lediglich die Container 80 bereit zu stellen, die dann automatisch in den Laderaum transferiert werden. Die dritte und vierte Antriebseinheit 310A bzw. 310B sind mittels Hydraulikleitungen 923A, 923B bzw. 924A, 924B mit der Steuereinheit 9 verbunden, der der momentan vorliegende Drehwinkel der Schwenkarme 31A, 31B beispielsweise von einem Messumformer 95 gemeldet wird. Vorzugsweise ist die Steuereinheit 9 derart programmiert, dass die jeweils vorliegende Maximalhöhe des Laderaumes beim Transfer der Paletten 8 nicht überschritten wird. Dieser Maximalwert kann durch die Steuereinheit 9 auch dann überwacht werden, wenn die Steuerung manuell erfolgt.

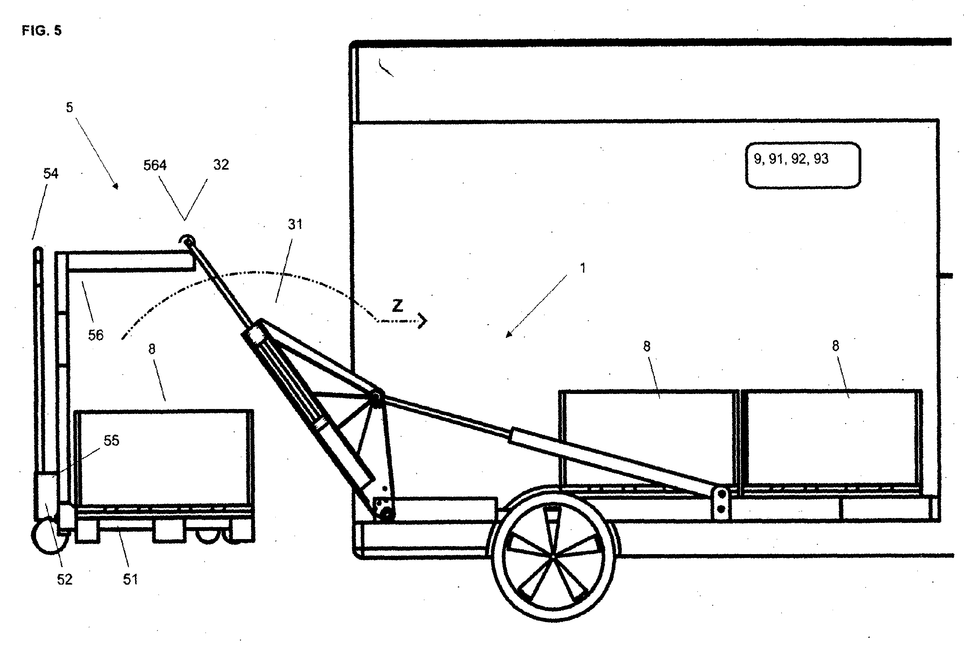

Figur 5 zeigt die im Laderaum eines Transportfahrzeugs installierte Hubvorrichtung 1 gemäss Figur 1 während des Anhebens eines erfindungsgemässen Handhubwagens 5, mittels dessen die damit gehaltene Last bzw. die Palette 8 im Laderaum des Transportfahrzeugs abgesetzt und zu einem Parkplatz gefahren werden kann. Die vorzugsweise ausgestaltete Basisvorrichtung 10 von Figur 2 oder die vorzugsweise Ausgestaltung der Hubvorrichtung 1 von Figur 4 ist in diesem Fall nicht erforderlich.

Der in den Figuren 5 und 6 näher dargestellte erfindungsgemässe Handhubwagen 5, der beispielsweise eine Weiterbildung des aus [4] bekannten Handhubwagens ist, weist ein mit einer Deichsel 54 verbundenes Fahrwerk auf. Das Fahrwerk besteht aus einem mit Laufrollen 511, 512 versehenen Hebelmechanismus 53, der höhenverstellbare, dem Tragen einer Palette 8 dienende Lastarme 51 aufweist, welche mittels einer Liftvorrichtung 52 anhebbar sind, die auf ein mit den Lastarmen 51 verbundenes Verbindungselement 510 einwirkt. Die Liftvorrichtung 52 wird mittels der Deichsel 54 und mittels eines an der Deichsel 54 vorgesehenen Handgriffs 541 betätigt. Durch Betätigung der Deichsel 54 werden die Lastarme 51 und eine gegebenenfalls darauf gelagerte Palette angehoben; indem der in Figur 7 gezeigte Kolben 521 unter hydraulischem Druck nach oben ausgefahren wird. Durch Betätigung des Handgriffs 541 kann der Kolben 521 wieder abgesenkt werden.

Erfindungsgemäss sind die Lastarme 51 bzw. das Verbindungsstück 510 mit einer Tragstruktur 56 verbunden, die mit zwei Halteelementen 564, beispielsweise Lasthaken, versehen ist, das insbesondere der Kopplung mit dem Tragelement 32 der erfindungsgemässen Hubvorrichtung 1 dient. Wie in Figur 5 gezeigt, kann der von der Hubvorrichtung 1 erfasste Handhubwagen 5 angehoben und in den Laderaum transferiert werden. Innerhalb des Laderaums wird der Handhubwagen 5 auf die Basisvorrichtung 10 oder den Boden des Laderaums abgesetzt, von der Hubvorrichtung 1 gelöst und zu einem Parkplatz gefahren, an der die Last bzw. die Palette 8 abgesetzt wird. Anschliessend wird der Handhubwagen 5 wieder mit der Hubvorrichtung 1 gekoppelt und aus dem Fahrzeug transferiert.

Damit sich bei den beschriebenen Hubvorgängen die Lastarme 51 bzw. das Verbindungsstück 510 nicht von der Liftvorrichtung 52 und der Deichsel 54 löst, sind diese mittels einer in Figur 7a näher dargestellten Kopplungsvorrichtung 55 wahlweise verbindbar und wieder lösbar. Die Kopplungsvorrichtung 55 weist eine in der Deichsel 54 vorgesehene Lagervorrichtung 552 auf, in der ein Kolben 553 verschiebbar gehalten ist, der in einen am Verbindungselement 510 vorgesehenen Aufnehmer 551 einführbar ist. Nach dem Einschieben des Kolbens 553 in den Aufnehmer 551 sind die Lastarme 51, die Deichsel 54 und somit auch die Liftvorrichtung 52 fest miteinander gekoppelt, so dass bei einer Krafteinwirkung durch die Hubvorrichtung 1, die Lastarme 51 mit der Last 8 und die Liftvorrichtung 52 mitsamt der Deichsel 54 angehoben werden.

In Figur 7a ist ferner gezeigt, dass der Kolben 553 mit einem Hilfselement 5531 versehen ist, das an einer schräg verlaufenden Kante 5541 eines Schiebers 554 anliegt. Der Schieber 554 ist über ein Verbindungselement 542 mit dem an der Deichsel 54 vorgesehenen Handgriff 541 verbunden. Das Verbindungselement 542 ist ferner mit der Liftvorrichtung 52 verbunden. Mittels des Handgriffs 541 können daher die Kopplungsvorrichtung 55 und die Liftvorrichtung 52 gleichzeitig betätigt werden. Durch Anheben des Schiebers 554 wird der Kolben 553 mit dem entlang der Kante 5541 verlaufenden Hilfselement 5531 nach aussen gezogen und aus dem Aufnehmer 551 gelöst. Zur Betätigung des Schiebers 554 und der Liftvorrichtung 52 können natürlich auch andere Mittel, gegebenenfalls auch ein Fusspedal, eingesetzt werden. Alternativ kann der Kolben 553 auch direkt manuell erfasst und in den Aufnehmer 551 eingeschoben werden.

Die Tragstruktur 56, welche die Lastarme 51 mit den Halteelementen 564 verbindet, weist zwei senkrecht zu den Lastarmen 51 ausgerichtete Stützen 561 auf an deren oberen Ende ein zumindest annähernd parallel zu den Lastarmen 51 ausgerichtetes Kopfelement 562 vorgesehen ist. Das Kopfelement 562 dient dem Halten und der Lagerung eines mit den Halteelementen 564 versehenen Schlittens 563, der mittels eines Handrades 565 und einer Schraube 566 entlang von Gleitflächen auf dem Kopfelement 562 verschiebbar ist. Nach dem Beladen des Handhubwagens 5 wird der Schlitten 563 vertikal über den Schwerpunkt des Handhubwagens 5 gefahren, so dass der beladene oder unbeladene Handhubwagen 5 nicht dreht oder kippt, wenn er angehoben wird. Der Schlitten 564 kann ferner mit einer Automatik versehen werden, welche die entsprechende Justierung automatisch vollzieht.

### Literaturverzeichnis

[1] EP 0 849 115
[2] Mercedes-Benz, "Beladen mit vielen Vorteilen", After Sales Service- und Zubehörangebot Herbst/Winter 2006
[3] Mercedes-Benz, ,,Der neue Sprinter", Katalog vom 15.10.2005
[4] CH 374 589

## Patentansprüche

1. Hubvorrichtung (1) mit einem Handhubwagen (5) für ein Transportfahrzeug, zum Laden, Entladen oder Verschieben von Gütern, mit einem Hebelwerk mit zwei Schwenkarmen (31A, 31B), die durch ein der Aufnahme einer Last (5, 8) dienendes Tragelement (32) miteinander verbunden sind, die um eine gemeinsame Achse (a) drehbar gelagert und je mittels eines ersten Gelenks (41A, 41B) drehbar mit Schubstangen (22) verbunden sind, die je mittels einer ersten bzw. zweiten Antriebseinheit (2A bzw. 2B) antreibbar sind, mit einer stabilen Basisvorrichtung (10) mit zwei zueinander parallelen und mittels wenigstens einer Querstrebe (12) miteinander verbundenen Basisprofilen (11A, 11B), an denen je ein mit dem zugehörigen Schwenkarm (31A bzw. 31B) verbundenes zweites Gelenk (42A bzw. 42B) und je ein mit der zugehörigen Antriebseinheit (2A bzw. 2B) verbundenes drittes Gelenk (43A bzw. 43B) vorgesehen ist, **dadurch gekennzeichnet, dass** die Basisvorrichtung (10) im Fahrzeugladeraum des Transportfahrzeugs mittels Montagemitteln (19) positionierbar ist und dass ein dem Transport einer Palette (8) dienender Handhubwagen (5) vorgesehen ist, der wenigstens ein Halteelement (564) aufweist, welches mit dem Tragelement (32) lösbar gekoppelt oder koppelbar ist, so dass dieser mitsamt der geladenen Palette (8) zwischen den Schwenkarmen (31A, 31B) hindurch über die Basisvorrichtung (10) anhebbar ist.

2. Hubvorrichtung mit einem Handhubwagen (1) nach Anspruch 1, **dadurch gekennzeichnet, dass** das Tragelement (32) zwei der Aufnahme der Last (5, 8) dienende Haltebügel (321A, 321B) aufweist.

3. Hubvorrichtung (1) mit einem Handhubwagen nach Anspruch 1 oder 2, **dadurch gekennzeichnet, dass** die Basisvorrichtung (10), vorzugsweise parallel zu den Basisprofilen (11A, 11B) verlaufend, ein oder mehrere Schienenpaare (151A, 151B; 152A, 152B; ...) aufweist, mittels denen je ein Transportelement, wie eine Transportplatte (161; 162) geführt ist.

4. Hubvorrichtung (1) mit einem Handhubwagen nach Anspruch 3, **dadurch gekennzeichnet, dass** die in zwei oder mehreren Schienenpaaren (151A, 151B; 152A, 152B; ...) geführten Transportelemente (161; 162) übereinander verschiebbar sind und dazu gegebenenfalls ineinander passende U-Profile aufweisen oder auf unterschiedlichen Höhen geführt sind.

5. Hubvorrichtung (1) mit einem Handhubwagen nach einem der Ansprüche 1-4, **dadurch gekennzeichnet, dass** jeder der beiden Schwenkarme (31) mit dritten und vierten Antriebseinheiten (310A, 310B) ausgerüstet ist, welche radial zur Achse (a) ausgerichtete Schubstangen (311A, 311B) antreiben, an denen das der Aufnahme der Last (8) dienende Tragelement (32), gegebenenfalls mit den Haltebügel (321A, 321B) vorgesehen ist.

6. Hubvorrichtung (1) mit einem Handhubwagen nach einem der Ansprüche 1-5, **dadurch gekennzeichnet, dass** die mittels einer Steuereinheit (9) steuerbaren Antriebseinheiten (2A, 2B; 310A, 310B) pneumatische, hydraulische oder elektrische Antriebseinheiten, wie Hydraulikzylinder sind, welche die zugehörigen Schubstangen (22; 311A, 311B) antreiben.

7. Hubvorrichtung (1) mit einem Handhubwagen nach Anspruch 6, **dadurch gekennzeichnet, dass** die die dritten und vierten Antriebseinheiten (310A, 310B) manuell oder mittels eines Steuerprogramms und Steuerelektronik (93) derart steuerbar sind, dass das der Aufnahme der Last (8) dienende Tragelement (32) entlang einer Kurve verläuft, wobei die Auslenkung der Schubstangen (311) der dritten und vierten Antriebseinheit (310A, 310B) vorzugsweise in Abhängigkeit des Drehwinkels der Schwenkarme (31A, 31B) erfolgt.

8. Hubvorrichtung (1) mit einem Handhubwagen nach einem der Ansprüche 1 - 7, **dadurch gekennzeichnet, dass** der Handhubwagen (5) höhenverstellbare Lastarme (51) aufweist, welche mittels einer gegebenenfalls über eine Deichsel (54) betätigbaren Liftvorrichtung (52) anhebbar sind, wobei die Lastarme (51) mit einer Tragstruktur (56) verbunden sind, die mit dem wenigstens einen Halteelement (564) versehen, und mittels einer Kopplungsvorrichtung (55) mit der Liftvorrichtung (52) oder der Deichsel (54) lösbar verbindbar ist.

9. Hubvorrichtung (1) mit einem Handhubwagen nach Anspruch 8, **dadurch gekennzeichnet, dass** die Kopplungsvorrichtung (55) mittels eines Hebels (541) betätigbar ist, der vorzugsweise auch der Bedienung der Liftvorrichtung (52) dient.

10. Hubvorrichtung (1) mit einem Handhubwagen nach Anspruch 8, 9 oder 10, **dadurch gekennzeichnet, dass** die Tragstruktur (56) ein zumindest annähernd parallel zu den Lastarmen (51) ausgerichtetes Kopfelement (562) aufweist, entlang dem ein mit den Halteelementen (564) versehener Schlitten (563) verschiebbar gelagert und wahlweise positionierbar ist, um eine den Handhubwagen (5) in horizontaler Lage zu halten.

11. Handhubwagen (5) für eine Hubvorrichtung (1) nach einem der Ansprüche 1 - 10 für den Transport einer Palette (8), mit einer Deichsel (54) und höhenverstellbaren, dem Tragen der Palette (8) dienenden Lastarmen (51), welche mittels einer gegebenenfalls anhand der Deichsel (54) betätigbaren Liftvorrichtung (52) anhebbar sind, **dadurch gekennzeichnet, dass** die Lastarme (51) mit einer Tragstruktur (56) verbunden sind, die mit dem wenigstens einen Halteelement (564) versehen ist, das der Kopplung mit der Hubvorrichtung (1) dient, wobei die Tragstruktur (56) zwei Stützen (561) aufweist, die an der Unterseite je mit einem der Lastarme (51) verbunden und senkrecht dazu ausgerichtet und an der Oberseite mit einem zumindest annähernd parallel zu den Lastarmen (51) ausgerichteten Kopfelement (562) verbunden sind, an dem der mit wenisgtens einem Halteelement versehene Schlitten (564) befestigt ist, der entlang den Gleitflächen des Kopfelements verschiebbar ist.

12. Handhubwagen (5) nach Anspruch 11, **dadurch gekennzeichnet, dass** die Lastarme (51) mittels einer Kopplungsvorrichtung (55) mit der Liftvorrichtung (52) oder der Deichsel (54) lösbar verbindbar sind.

13. Handhubwagen (5) nach Anspruch 12, **dadurch gekennzeichnet, dass** die Kopplungsvorrichtung (55) mittels eines Hebels (541) betätigbar ist, der vorzugsweise auch der Bedienung der Liftvorrichtung (52) dient.

14. Handhubwagen (5) nach Anspruch 11, 12 oder 13, **dadurch gekennzeichnet, dass** entlang dem Kopfelement (562) ein mit den Halteelementen (564) versehener Schlitten (563) verschiebbar gelagert.

## Claims

1. Lifting device (1) with a manual lift truck (5) for a transport vehicle, for loading, unloading or moving goods, comprising a lever mechanism with two pivoting arms (31A, 31B), which are connected with one another by means of a support element (32) serving for receiving a load (5, 8), which are supported rotatably around a common axis (a) and each by means of a first hinge (41A, 41B) are pivotally connected with push rods (22) that can be driven each by a first respectively second drive unit (2A respectively 2B) respectively, with a stable base device (10) comprising two base profiles (11A, 11B), which are aligned in parallel and connected with one another by means of at least one transverse strut(12), and on which each a second hinge (42A respectively 42B), that is connected to the related pivot arm (31A respectively 31B), and a third hinge (43A respectively 43B), that is connected to the related drive unit (2A respectively 2B), are provided, **characterised in that** the base device (10) can be positioned in the vehicle cargo space by means of mounting means (19) and that a manual lift truck (5) is provided serving for transporting a pallet (8), which comprises at least one retaining element (564), which is detachably coupled or couplable with the support element (32), so that it can be lifted together with the pallet (8) through between the pivoting arms (31A, 31B) over the base device (10).

2. Lifting device with a manual lift truck (1) according to claim 1, **characterised in that** the support element (32) comprises two holding brackets (321A, 321B) serving for receiving the load (5, 8).

3. Lifting device (1) with a manual lift truck according to claim 1 or 2, **characterised in that** the base device (10), preferably aligned in parallel to the base profiles (11A, 11B), comprises one or a plurality of rail pairs (151A, 151B; 152A, 152B; ...), with which each a transport element, such as a transport plate (161; 162) is guided.

4. Lifting device (1) with a manual lift truck according to claim 3, **characterised in that** the transport elements (161; 162) which are guided in one or in a plurality of rail pairs (151A, 151B; 152A, 152B; ...) are shiftable above one another and therefore, if appropriate, comprise U-Profiles fitting into one another or are guided in different heights.

5. Lifting device (1) with a manual lift truck according to one of the claims 1-4, **characterised in that** each of the two pivoting arms (31) is equipped with third and fourth drive units (310A, 310B), which drive push rods (311A, 311B) aligned radially to the axis (a), on which the support element (32) serving for receiving the load (8), if appropriate with the holding bracket (321A, 321B), is provided.

6. Lifting device (1) with a manual lift truck according to one of the claims 1-5, **characterised in that** drive units (2A, 2B; 310A, 310B), which are controllable by means of the control unit (9), are pneumatic, hydraulic or electrical drive units, such as hydraulic cylinders, which drive the related push rods (22; 311A, 311B).

7. Lifting device (1) with a manual lift truck according to claim 6, **characterised in that** the third and fourth drive units (310A, 310B) are controllable manually or by means of a control program and control electronics (93) in such a way, that the support element (32) serving for receiving the load (8) runs along a curve, wherein the deflection of the push rods (311) of the third and fourth drive unit (310A, 310B) is executed preferably depending on the angle of turning of the pivoting arms (31A, 31B).

8. Lifting device (1) with a manual lift truck according to one of the claims 1 - 7, **characterised in that** the manual lift truck (5) comprises load arms (51) that are adjustable in height and that by means of a lift device (52), which if appropriate may be operated with a drawbar (54), can be lifted, wherein the load arms (51) are connected with a support structure (56), which is provided with the at least one retaining element (564), and which is releasably connectable by means of a coupling device (55) with the lift device (52) or the drawbar (54).

9. Lifting device (1) with a manual lift truck according to claim 8, **characterised in that** the coupling device (55) can be operated by means of a lever (541), which preferably also serves for operating the lift device (52).

10. Lifting device (1) with a manual lift truck according to claim 8, 9 or 10, **characterised in that** the support structure (56) comprises a head element (562) which is aligned at least approximately in parallel to the load arms (51) and along which a sliding carriage (563) that is provided with the retaining elements (564) is shiftably supported and can selectively be positioned in order to hold the manual lift truck (5) in horizontal alignment.

11. Hand pallet truck (5) for a lifting device (1) according to one of the claims 1 - 10 for the transport of a pallet (8), with a drawbar (54) and load arms (51) that serve for supporting the pallet (8) and that are adjustable in height, which can be lifted by means of a lift device (52), which, if appropriate, can be operated by the drawbar (54), **characterised in that** the load arms (51) are connected with a support structure (56), which is provided with the at least one retaining element (564) that serves for coupling with the lifting device (1), wherein the support structure (56) comprises two columns (561), which are each connected on the lower side with one of the load arms (51) and aligned perpendicularly thereto and which are each connected on the upper side a with a head element (562) that is at least approximately aligned in parallel to the load arms (51) and on which the sliding carriage(564) is mounted that is provided with the at least one retaining element and that is shiftable along the sliding planes of the head element.

12. Manual lift truck (5) according to claim 11, **characterised in that** the load arms (51) are detachably connectable by means of the coupling device (55) with the lift device (52) or the drawbar (54).

13. Manual lift truck (5) according to claim 12, **characterised in that** the coupling device (55) is operable by means of a lever (541), which preferably also serves for operating the lift device (52).

14. Manual lift truck (5) according to claim 11, 12 or 13, **characterised in that** a sliding carriage (563), which is provided with the retaining elements (564), is supported shiftably along the head element (562).

## Revendications

1. Dispositif de levage (1) comprenant un chariot manuel de levage (5) pour un véhicule de transport destiné au chargement, déchargement ou déplacement de marchandises muni d'un mécanisme à levier avec deux bras pivotants (31A, 31B) qui sont reliés l'un à l'autre par un élément porteur (32) servant à recevoir une charge (5, 8), qui sont logés en rotation autour d'un axe commun (a) et sont reliés en rotation chacun au moyen d'une première articulation (41A, 41B) par des tiges de poussée (22) qui peuvent être entraînées chacune au moyen d'une première respectivement d'une seconde unité d'entraînement (2A respectivement 2B), comprenant un dispositif de base stable (10) avec deux profilés de base (11A, 11B) parallèles et reliés entre eux au moyen d'au moins une traverse (12), profilés sur lesquels il est prévu respectivement une seconde articulation (42A respectivement 42B) reliée au bras pivotant (31A respectivement 31B) et une troisième articulation (43A respectivement 43B) reliée à l'unité d'entraînement respective (2A respectivement 2B), **caractérisé en ce que** le dispositif de base (10) est positionnable dans l'espace de chargement du véhicule de transport par le biais de moyens de montage (19) et **en ce qu'**il est prévu un chariot de levage manuel (5) servant au transport d'une palette (8), chariot qui présente au moins un élément de maintien (564) qui est accouplé ou accouplable de manière amovible à l'élément porteur (32) de sorte que le chariot peut être soulevé au-dessus du dispositif de base (10) ensemble avec la palette (8) chargée entre les bras pivotants (31A, 31B).

2. Dispositif (1) avec un chariot de levage manuel selon la revendication 1, **caractérisé en ce que** l'élément porteur (32) présente deux étriers de maintien (321A, 321B) servant à la réception de la charge (5, 8).

3. Dispositif (1) avec un chariot de levage manuel selon la revendication 1 ou 2, **caractérisé en ce que** le dispositif de base (10) présente parallèlement aux profilés de base (11A, 11B), une ou plusieurs paires de rails (151A, 151B; 152A, 152B; ...), au moyen desquels est guidé un élément de transport, tel qu'une plaque de transport (161 ; 162).

4. Dispositif (1) avec un chariot de levage manuel (1) selon la revendication 3, **caractérisé en ce que** les éléments de transport (161 ; 162) guidés dans deux ou plusieurs paires de rails (151A, 151B; 152A, 152B; ...) sont coulissants les uns au-dessus des autres et présentent pour ce faire des profilés en U pouvant éventuellement être enfilés les uns dans les autres ou sont guidés à des hauteurs différentes.

5. Dispositif (1) avec un chariot de levage manuel selon l'une des revendications 1 à 4, **caractérisé en ce que** chacun des deux bras pivotants (31) est muni de troisième et quatrième unités d'entraînement (310A, 310B) qui entraînent des tiges de poussée (311A, 311B) orientées radialement à l'axe (a), tiges sur lesquelles il est prévu l'élément porteur (32) servant à la réception de la charge (8), éventuellement avec les étriers de maintien (321A, 321B).

6. Dispositif (1) avec un chariot de levage manuel selon l'une des revendications 1 à 5, **caractérisé en ce que** les unités d'entraînement (2A, 2B ; 310A, 310B) commandables au moyen d'une unité de commande (9) sont des unités d'entraînement pneumatiques, hydrauliques ou électriques, tels que des vérins hydrauliques qui entraînent les tiges de poussée respectives (22; 311A, 311B).

7. Dispositif (1) avec un chariot de levage manuel selon la revendication 6, **caractérisé en ce que** les troisième et quatrième unités d'entraînement (310A, 310B) sont commandables manuellement ou au moyen d'un programme de commande et d'une électronique de commande (93) de sorte que l'élément porteur (32) servant à la réception de la charge (8) s'étend le long d'une courbe, la flèche des tiges de poussée (311) de la troisième et de la quatrième unité d'entraînement (310A, 310B) se réalisant de préférence en fonction de l'angle de rotation des bras pivotants (31A, 31B).

8. Dispositif (1) avec un chariot de levage manuel selon l'une des revendications 1 à 7, **caractérisé en ce que** le chariot manuel de levage (5) présente des bras de charge (51) réglables en hauteur qui peuvent être soulevés au moyen d'un dispositif de levage (52) actionnable au moyen d'un bras de traction (54), les bras de charge (51) étant reliés à une structure portante (56) qui est munie d'un élément de maintien (564) et qui est reliable de manière amovible au moyen d'un dispositif d'accouplement (55) au dispositif de levage (52) ou au bras de traction (54).

9. Dispositif (1) avec un chariot de levage manuel selon la revendication 8, **caractérisé en ce que** le dispositif d'accouplement (55) est actionnable au moyen d'un levier (541) qui sert de préférence également à la manipulation du dispositif de levage (52).

10. Dispositif (1) avec un chariot de levage manuel selon la revendication 8, 9 ou 10, **caractérisé en ce que** la structure portante (56) présente un élément de tête (562) orienté au moins parallèlement aux bras de charge (51), le long duquel une glisse (563) muni des éléments de maintien (564) est logé coulissant et est positionnable au choix pour maintenir le chariot de levage manuel (5) en position horizontale.

11. Chariot manuel de levage (5) pour un dispositif de levage (1) selon l'une des revendications 1 à 10 pour le transport d'une palette (8) avec une barre de traction (54) et des bras de charge (51) réglables en hauteur, servant à porter la palette (8), qui sont soulevables au moyen d'un dispositif de levage actionnable (52) éventuellement à l'aide de la barre de traction (54), **caractérisé en ce que** les bras de charge (51) sont reliés à une structure portante (56) qui est munie d'au moins un élément de maintien (564) qui sert à l'accouplement au dispositif de levage (1), la structure portante (56) présentant(56) présentant deux appuis (561) qui sont reliés sur la face inférieure respectivement à l'un des bras de charge (51) et sont orientés perpendiculairement, et sont reliés sur la face supérieure à au moins un élément de tête (562) orienté au moins approximativement parallèlement aux bras de charge (51), élément de tête sur lequel est fixé la glisse (564) muni d'au moins un élément de maintien, chariot qui est coulissant le long des surfaces coulissantes de l'élément de tête.

12. Chariot élévateur manuel (5) selon la revendication 11, **caractérisé en ce que** les bras de charge (51) peuvent être reliés de manière amovible au moyen d'un dispositif d'accouplement (55) au dispositif de levage (52) ou de la barre de traction (54).

13. Chariot de levage manuel (5) selon la revendication 12, **caractérisé en ce que** le dispositif d'accouplement (55) est actionnable au moyen d'un levier (541) qui sert de préférence également à la manipulation du dispositif de levage (52).

14. Chariot de levage manuel (5) selon la revendication 11, 12 ou 13, **caractérisé en ce qu'**une glisse (563) muni des éléments de maintien (564) est logé coulissant le long de l'élément de tête (562).
